# FASCICULE DE BREVET EUROPEEN

(11) **EP 2 714 828 B1**
(45) Date de publication et mention de la délivrance du brevet: **01.01.2020**
(21) Numéro de dépôt: 12721325.4
(22) Date de dépôt: 26.03.2012
(51) Int. Cl.: C09J 4/06, C09J 125/00, C09J 133/00, C09J 153/00

(54) **ADHÉSIFS STRUCTURAUX, PROCÉDÉ POUR LEUR PRÉPARATION, ET LEUR APPLICATION**
STRUKTURKLEBER, VERFAHREN ZU IHRER HERSTELLUNG UND IHRE VERWENDUNG
STRUCTURAL ADHESIVES, PROCESS FOR THE PREPARATION THEREOF, AND APPLICATION THEREOF

(30) Priorité: 25.03.2011 FR 1100892
(43) Date de publication de la demande: 09.04.2014
(73) Titulaire: Adhesifs et Composites Polymers, 33114 le Barp (FR)
(72) Inventeur: VALLOIR, Nicolas, F-33114 le Barp (FR); FRADIN, Olivier, f-33600 Pessac (FR); BRET, Christian, F-33200 Bordeaux (FR); VAIQUE, Emilie, F-33820 Saint Ciers sur Gironde (FR); CHIRON, Gérard, F-33170 Gradignan (FR); ROUX, Mathieu, F-33140 Villenave d'Ornon (FR)
(74) Mandataire: Schaefer, Anne-Sophie
(86) Numéro de dépôt international: PCT/FR2012/000106
(87) Numéro de publication internationale: WO 2012/131185

(56) Documents cités:
- EP-A2- 0 357 304
- WO-A1-98/23658
- FR-A1- 2 914 651

## Description

### DOMAINE TECHNIQUE

La présente invention concerne le domaine du collage des matériaux pour former des assemblages de matières identiques ou différentes. Elle concerne plus particulièrement le collage de matières pouvant subir des dilatations lors de leur utilisation, et entres autres le collage et/ou le calfatage des ponts et/ou des coques de bateaux.

### ARRIÈRE-PLAN TECHNOLOGIQUE

On connaît pour de tels usages des adhésifs dits adhésifs structuraux, composés de deux éléments, conservés séparément, dont l'un est un catalyseur destiné à effectuer la polymérisation de l'autre élément qui contient des monomères.

Les colles et adhésifs structuraux comprennent trois grandes familles de polymères, qui apportent sa structure au joint de colle. Ces trois grandes familles réticulent de façons différentes, et elles sont incompatibles entre elles. Elles peuvent être classées en fonction de leur module, caractérisé par leur résistance en traction-cisaillement (TC), et de leur élasticité. Ce sont les adhésifs sur matrice époxyde, ceux sur matrice polyuréthane, et ceux sur matrice méthacrylate.

Les colles à l'époxyde (polyaddition époxy/amine) présentent un module élevé allant jusqu'à 40 MPa et TC, mais un faible allongement de 3-5%.

Les colles à base de polyuréthane (polyaddition polyol/poly-isocyanate) ont un module faible, de l'ordre de 5-10 MPa en TC, alors qu'elles présentent un allongement pouvant atteindre 100%.

Les colles sur matrice méthacrylate (polyaddition radicalaire) présentent un module élevé (20 à 30 MPa en TC), mais un allongement moyen faible, ne dépassant pas 40%.

Ce sont les colles à base de méthacrylates qui présentent le meilleur compromis entre un module élevé, conférant à l'assemblage une résistance importante aux efforts de traction sur les substrats, et une bonne résistance à la fatigue, apportée par la flexibilité du joint de collage.

Leur résistance au vieillissement et aux produits chimiques est excellente.

De plus, l'application des colles sur base méthacrylate entraîne moins de contraintes que celle des autres produits adhésifs structuraux.

Le document WO 98/23658 décrit une composition durcissable, utile pour des revêtements ou comme adhésif, comprenant (a) un monomère polymérisable, (b) un polymère de coeur/ coquille, et (c) un composant polymérisable liquide capable de conférer de la résistance lors de sa polymérisation, tandis que les monomères polymérisables (a) et (c) doivent être différents.

Le document FR 07 02485 décrit une composition pour adhésif structural comprenant (a) au moins un monomère ester méthacrylate, (b) au moins un copolymère bloc élastomère, (c) un élastomère sélectionné, et (d) des particules formées d'une coquille thermoplastique et d'un coeur élastomérique, tandis que le composant (b) doit comprendre au moins un copolymère bloc élastomérique contenant du styrène et au moins un second monomère.

Le document FR 06 11442 décrit une composition pour adhésif comportant obligatoirement au moins un monomère ester méthacrylate; au moins un élastomère choisi parmi le polybutadiène, le polyisoprène et le polychloroprène; ainsi qu'au moins deux copolymères blocs élastomériques comportant tous du styrène parmi leurs unités monomères.

Le document EP 0 357 304 décrit une composition adhésive structurale acrylique, comprenant 50-75% d'un ester méthacrylate monomère; 0-15% d'un acide mono- ou dicarboxylique à insaturations éthyléniques, polymérisable; 10-30% d'un polymère de cœur/coquille; et 5-20% d'un polymère élastomère. Mais une telle composition pose en pratique des problèmes, non seulement dans la formulation, mais également dans l'application de la composition sur une surface.

Il existe par ailleurs des adhésifs possédant un allongement à la rupture élevé (allant jusqu'à environ 200-250%), mais de tels adhésifs présentent une faible résistance en traction/ cisaillement qui empêche qu'ils soient des adhésifs structuraux.

D'une manière plus générale, les divers adhésifs structuraux traditionnels ainsi décrits ou proposés présentent:
- un allongement à la rupture trop faible pour permettre des assemblages de matériaux pouvant subir de fortes dilatations;
- une faible élasticité, dont le corollaire est un fluage des polymères, phénomène irréversible fragilisant le joint de colle et réduisant sa résistance aux vibrations ou aux sollicitations répétées;
- un temps de réticulation difficilement acceptable dans des installations industrielles; car non-adaptable en fonction des applications, et
- une épaisseur des joints limitée en pratique dans l'intervalle de 250 à 300 micromètres.

Il subsiste ainsi un besoin pour la réalisation de collages de matériaux divers dans des conditions économiques, sans primer ou primaire d'adhérence, avec durcissement rapide et surtout avec une durabilité et une résistance aux sollicitations mécaniques et/ou thermiques assurant le maintien de l'intégrité du collage et des pièces collées. Ce besoin est encore plus marqué pour les ponts et/ou coques de navires, pour lesquels le collage et/ou calfatage concerne le bois, notamment le teck, et un ensemble de substrats métalliques, de substrats polymériques et ou de substrat lui-même en bois.

### EXPOSÉ DE L'INVENTION

On a maintenant trouvé que toutes ces propriétés peuvent être significativement améliorées, et que les inconvénients susdits peuvent être évités, au moyen d'une composition adhésive selon l'invention, qui comporte un système polymérique mis en oeuvre dans une matrice de méthacrylate,
ledit système polymérique étant fondé sur des copolymères séquencés (encore dénommés copolymères à blocs) sans styrène, formés d'au moins deux blocs et avantageusement d'au moins trois blocs, et
ledit système polymérique étant solubilisé dans une matrice de monomères acryliques et/ou méthacryliques, linéaires ou ramifiés, et/ou de méthacrylates cycliques et/ou de méthacrylates aromatiques,
tandis que ladite matrice est incluse ou destinée à être incluse dans une formulation traditionnelle d'adhésif de type méthacrylate.

La formulation résultante peut avantageusement être polymérisée par un système classique redox, tel que par exemple celui habituellement mis en oeuvre pour toute formulation méthacrylate.

L'invention a ainsi pour premier objet une composition pouvant être incorporée dans des adhésifs structuraux, comportant essentiellement un système polymérique apte à être mis en oeuvre dans une matrice de méthacrylate,
ledit système polymérique comprenant des copolymères séquencés (encore dénommés copolymères à blocs, par exemple A, B, C, etc.) sans styrène, formés d'au moins deux blocs et avantageusement d'au moins trois blocs, et ledit système polymérique étant solubilisé dans une matrice de monomères acryliques et/ou méthacryliques, linéaires ou ramifiés, et/ou de méthacrylates cycliques et/ou de méthacrylates aromatiques,
tandis que ladite matrice est incluse ou destinée à être incluse dans une formulation traditionnelle d'adhésif de type méthacrylate.

Dans une forme de réalisation, les copolymères à blocs sans styrène dudit système polymérique (où lesdits blocs sont classiquement dénommés A, B, C, etc.) sont essentiellement constitués de polymères thermodurcissables et/ou thermoplastiques, présentant par exemple des séquences A-B-A-, ou A-B-B-A- ou encore A-A-B-.

Les motifs impliqués dans les copolymères à blocs susdits peuvent être choisis avantageusement, mais sans que cela soit limitatif, parmi les motifs méthacrylate, et plus préférentiellement les méthacrylates à 5 atomes de carbone, de type méthacrylate de méthyle, et/ou 8 atomes de carbone, de type méthacrylate de butyle.

En variante, les motifs impliqués dans le copolymère séquencé ou copolymère à blocs susdit peuvent être fonctionnalisés. Des fonctions utiles pour une telle fonctionnalisation sont notamment les fonctions acide ou hydroxyle, et préférentiellement des fonctions acides méthacryliques.

Dans une forme de mise en œuvre avantageuse, lesdits copolymères à blocs sont des copolymères à blocs nanostructurés. Les polymères nanostructurés sont connus par l'homme du métier et peuvent être préparés et/ou analysés par celui-ci sur la base de ses propres connaissances, si nécessaire avec l'aide de références bibliographiques appropriées.

Selon l'invention, le copolymère à blocs ainsi élaboré est solubilisé dans une matrice de monomères acryliques et/ou méthacryliques aliphatiques, linéaires et/ou ramifiés, et/ou de méthacrylates cycliques et/ou de méthacrylates aromatiques, pour donner une composition apte à être utilisée dans des adhésifs structuraux.

Avantageusement, le copolymère à blocs est ainsi solubilisé à plus d'environ 5% en poids ou en volume et de préférence à plus d'environ 10% en poids ou en volume du copolymère dans ladite matrice.

Sous un autre aspect, l'invention concerne une formulation d'adhésif structural comportant une composition telle que décrite ci-dessus dans une matrice de méthacrylate. Ladite matrice de méthacrylate traditionnelle peut, si on le souhaite, comporter également des éléments styréniques, tels que notamment SBR (caoutchouc de styrène butadiène) et/ou SBS (styrène butadiène styrène) et/ou NBR (caoutchouc de nitrile butadiène) et/ou SEBS (styrène éthylène butadiène styrène) et/ou SBM (styrène butadiène méthacrylate de méthyle).

Sous un autre aspect, l'invention concerne une formulation d'adhésif telle que décrite ici, pour procurer un collage de surfaces de matériaux identiques ou différents entre eux, tandis que le collage présente une résistance à la traction/cisaillement d'environ 8 à 25 MPa selon les matériaux et les épaisseurs d'adhésif appliquées.

L'invention concerne également un procédé pour l'obtention d'une telle formulation, dans lequel:
- on élabore ou on procure un système polymérique comprenant des copolymères à blocs sans styrène, formés d'au moins deux blocs et avantageusement d'au moins trois blocs, et
- on solubilise ledit système polymérique dans une matrice de monomères acryliques et/ou méthacryliques, linéaires ou ramifiés, et/ou de méthacrylates cycliques et/ou de méthacrylates aromatiques, et
- on incorpore ou prescrit d'incorporer ladite matrice dans une formulation traditionnelle d'adhésif de type méthacrylate.

Sur la base de la technique antérieure et de ses connaissances propres, l'homme du métier est apte à sélectionner des constituants appropriés pour l'élaboration d'une composition selon l'invention, par de simples essais de routine, dans chaque application envisagée.

L'invention a également pour objet l'utilisation d'une formulation selon l'invention pour la réalisation d'opérations de collage mettant en oeuvre un système classique redox, avantageusement sur des matières telles que, verre, polystyrène, ABS, polyester, polycarbonate, aluminium, acier, acier inoxydable, acier galvanisé, et/ou PMMA, entre autres.

Sous encore un autre aspect, l'invention concerne le collage et/ou le calfatage du bois, sur un ensemble de substrats métalliques, de substrats polymériques ou encore du bois sur lui-même, notamment pour des ponts et/ou coques de navire.

Le calfatage est une technique bien connue, en particulier dans le domaine de l'étanchéification des ponts en bois de navires, pour lesquels il est nécessaire que le calfatage soit polyvalent, durable et efficace sur tous types de ponts, notamment ceux en teck, avec en outre une exigence de facilité de mise en oeuvre.

Actuellement, le calfatage des ponts en teck des navires s'effectue principalement avec des compositions de calfatage à base de polyuréthanes, mais également avec d'autres polymères tels que les MS polymères par exemple. Les MS sont des polymères élastomériques à base de méthacrylates-styrène, qui jouent le rôle de modificateurs d'impact en conférant de l'élasticité aux compositions appliquées sur le support à calfater ou à coller.

On ne pouvait envisager sur de telles bases des calfatages de ponts de navires, notamment de ponts en teck.

En effet, les techniques actuelles de calfatage des ponts de navires nécessitent:
- l'application d'un primaire,
- le plus grand soin pour compenser par anticipation le retrait de post-réticulation de la composition appliquée dans les rainures du bois,
- un long délai de séchage avant que le ponçage, étape nécessaire, puisse être entrepris, et
ne peuvent empêcher
- une résistance insuffisante du joint en traction/cisaillement,
- une insuffisance d'élasticité des joints de calfatage,
- l'apparition de fissures,
- une tenue insuffisante aux rayonnements UV, et
- une tenue insuffisante au vieillissement humide.

Mais il subsistait encore un besoin pour la réalisation de tels calfatages dans des conditions de praticité, d'efficacité et d'économie acceptables.

Sous cet aspect, la composition et son procédé d'obtention conformes à la présente invention se sont avérés permettre d'atteindre des performances exceptionnelles dans les opérations de calfatage des ponts de navire en bois, notamment en teck.

De telles compositions utilisées en tant que substances de calfatages dans ces applications peuvent être mise en oeuvre selon un procédé significativement plus simple et plus performant que celui qui est traditionnellement employé pour les calfatages actuels. On a en outre trouvé que la mise en œuvre de ces calfatages assure également un excellent collage des substrats en bois, notamment des lattes en bois, en particulier des lattes en teck sur les ponts composites ou sur toutes autres surfaces d'un substrat revêtu de lattes en bois.

La formulation de calfatage et d'adhésif telle que décrite ici peut ainsi être destinée au calfatage et en option au collage de surfaces de matériaux identiques ou différents entre eux, tels que bois-bois (par exemple teck sur teck ou autre bois), teck sur substrat composite, etc.), tandis que le calfatage/ collage qu'elle procure par le procédé décrit plus loin peut présenter une résistance à la traction/ cisaillement d'environ 8 à 25 MPa, et une exceptionnelle tenue au vieillissement humide avec les matériaux considérés et aux mêmes épaisseurs que celles classiquement appliquées avec les compositions traditionnelles de calfatage.

Sous cet aspect, l'invention notamment pour objet l'utilisation d'une formulation selon l'invention pour la réalisation d'opérations de calfatage ou de calfatage/ collage mettant en oeuvre un système classique redox, avantageusement sur des matières telles que, verre, polystyrène, ABS, polyester, polycarbonate, aluminium, acier, acier inoxydable, acier galvanisé, et/ou PMMA, entre autres.

Sous cet aspect, l'invention a en outre pour objet un procédé de calfatage ou de calfatage/collage comportant les étapes essentielles de:
a) dégraissage du bois à calfater et du pont du navire concerné,
b) application de la composition de colle/calfatage selon l'invention, avantageusement sous l'eau, et accostage du pont en teck,
c) remplissage des rainures avec ladite composition en amenant la résine appliquée à faire seulement un léger dôme pour lui permettre de compenser le retrait post-réticulation,
d) réticulation classique de la composition appliquée, et
e) ponçage de l'excédent de composition de calfatage/ collage de la surface des joints ainsi appliqués et durcis, après une durée pouvant ne pas dépasser 2-4 heures environ.

Pour mémoire, il convient de rappeler ici que les procédés traditionnels de calfatage comportent nécessairement les étapes de :
- dégraissage de la surface (par exemple du teck et du pont),
- application 'un primaire sur le teck et éventuellement sur le substrat, qui peut être par exemple en composite,
- application de la colle et accostage du teck,
- remplissage des rainures à calfater avec le polymère, mais en veillant à compenser suffisamment le retrait de post-réticulation, car les rainures font en général 6 à 8 mm de largeur,
- ponçage après 3 à 4 jours de l'excédent de colle dépassant des rainures.

Les avantages qui ont pu être révélés par la mise en œuvre de la présente invention, par comparaison avec la technique traditionnelle, sont essentiellement:
- pas de primaire à appliquer et collage direct sur le matériau à calfater, donc gain de temps aussi bien en application qu'en séchage,
- retrait inférieur, seulement de l'ordre de 1,2%,
- aptitude du joint au ponçage après seulement environ 2 à 4 heures, contre 3 à 4 jours,
- résistance significativement supérieure en traction/cisaillement,
- plus grande élasticité, allant jusqu'à 400% contre 150-200% avec les polymères de calfatage utilisés actuellement, ce qui représente un indéniable avantage pour le teck qui est un bois qui se dilate et se rétracte en fonction de son taux d'humidité,
- pas d'apparition de fissures, alors qu'il s'en forme actuellement,
- tenue aux rayonnements UV significativement meilleure qu'avec les polymères utilisés actuellement, et
- meilleure tenue au vieillissement humide que pour les polymères utilisés actuellement.

Dans ce domaine du calfatage/collage pour bateaux comme dans d'autres, un atout remarquable de la technique selon la présente invention est que les opérations de collage et/ou calfatage peuvent très bien être mises en œuvre sous l'eau.

Les adhésifs structuraux sont des produits bi-composants, qui peuvent ainsi comprendre une composition pour formulation d'adhésif conforme à la présente invention et un agent catalyseur, destiné à permettre la polymérisation et la prise de la formulation d'adhésif.

L'invention sera mieux comprise, et d'autres objectifs, avantages et caractéristiques de celle-ci apparaîtront plus clairement, à la lumière de la description détaillée ci-après de modes de mise en oeuvre de l'invention.

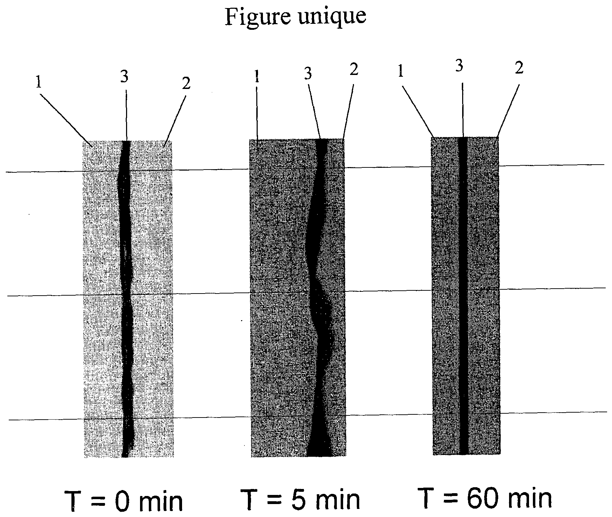

Ces modes de réalisation sont fournis à titre purement illustratif et nullement limitatif, tandis qu'est annexée à la présente description une Figure unique, représentant en coupe transversale une partie d'un assemblage de deux pièces (1, 2; en gris) collées l'une sur l'autre sur une zone définie au moyen d'un adhésif structural (3; en noir).

### EXEMPLES

Mode opératoire pour la préparation d'une composition pouvant être utilisée dans des adhésifs structuraux selon l'invention:
Dans un réacteur muni de dispositifs mélangeurs et disperseurs, de préférence à fond plat, on a introduit 20 g de copolymère à blocs et 70 g d'une matrice de monomère acrylique ou méthacrylique. On a agité pendant environ 10 min à température ambiante, et on a ensuite ajouté 6 g d'additifs rhéologiques et 4 g d'additifs d'adhérence, les uns et les autres du type de ceux-ci connus de l'homme du métier. On agite encore pendant 20 min, et on introduit 1 g d'amine. Après une homogénéisation classique pendant un temps suffisant, en pratique pendant environ 10 min, on obtient un produit brut, thixotrope et de couleur brune plus ou moins foncée.

Selon les utilisations auxquelles il est destiné, il est possible de colorer ce produit à l'aide de pigments organiques ou minéraux.

Des compositions pour incorporation dans des adhésifs structuraux de type méthacrylate élaborées selon ce mode opératoire ont été sélectionnées dans les gammes de valeurs de constituants indiquées ci-après:

| | % en poids |
|---|---|
| Copolymères à blocs | 1-40 |
| Monomères acryliques et/ou méthacryliques | 1-90 |
| Epoxyde | 1-40 |
| Amide | 1-40 |

| | |
|---|---|
| Note: Le total des constituants présents dans une même formule est alors sensiblement égal à 100%. | |

En option, l'adhésif structural peut comporter des éléments additionnels dans la formulation d'adhésif de type méthacrylate classique, notamment choisis parmi SBR et/ou SBS et/ou NBR et/ou SEBS et/ou SBM.

A titre d'exemples de variantes de réalisation de l'invention, on a préparé des matrices avec copolymère à blocs ayant des compositions dans les gammes et les choix de matières suivants:
- De 5 à 60%, et plus particulièrement de 10 à 30%, en poids de copolymère à blocs MAM-ABU-MAM ou MAM-BU-MAM fonctionnalisés ou non. Dans ces blocs ou séquences de copolymères, MAM = méthacrylate de méthyle, ABU = acrylate de butyle, BU = butadiène.
- De 40 à 95%, et plus particulièrement de 70 à 90%, en poids d'acrylates et/ou de méthacrylates aliphatiques, cycliques et/ou aromatiques, linéaires et/ou ramifiés, ayant dans leur formule plus de 5 atomes de carbone, avantageusement de 5 à 10 atomes de carbone, de type méthacrylate de méthyle, méthacrylate d'éthyle, méthacrylate de propyle, méthacrylate de butyle, méthacrylate de pentyle, méthacrylate d'hexyle, méthacrylate de benzyle, méthacrylate de cyclohexyle et autres, pour former la matrice de solubilisation des copolymères à blocs.

Un exemple de gamme de colles selon l'invention (où les pourcentages indiqués sont en poids) est le suivant:
- 40 à 87,50%, avantageusement 60 à 80%, de copolymères à blocs selon l'invention;
- 10 à 40% d'acrylates et/ou méthacrylates, avantageusement 15 à 25% de méthacrylates selon l'invention, tels que décrits ci-dessus;
- 1 à 10%, avantageusement environ 5%, d'additifs rhéologiques physiques et/ou chimiques, avantageusement environ 5% d'additifs rhéologiques physiques;
- 1 à 10%, avantageusement environ 5%, d'additifs d'adhérence;
- 0,5 à 5% d'une ou plusieurs amines aliphatiques, hétérocycliques ou aromatiques, lesdites amines pouvant être primaires, secondaires et/ou tertiaires, et avantageusement environ 1% d'amines secondaires et/ou tertiaires.

Le système de réticulation peut être un système traditionnel de réticulation par voie radicalaire, amorcé par un système peroxydique et/ou par des azonitriles.

On valide la fabrication d'un tel produit pour formulation d'adhésif structural en contrôlant que le produit brut a une densité voisine de 1, plus particulièrement d_{20°C} = 0,97 ± 0,03, et une viscosité V_{20°C} = 15 ± 2 Pa.s.

Une fois appliquée et réticulée, une telle formule selon l'invention présente, après 24 h, un allongement à la rupture d'environ 400% et une résistance à la traction/au cisaillement sur de l'aluminium Alu 6060 d'au moins 12 MPa.

Un cataplasme humide 7 jours (à 70°C, 100% d'humidité, puis à -20°C pendant 2 h) a donné lieu à une rupture cohésive à 8 MPa.

A titre d'exemple comparatif, on a élaboré une formule traditionnelle d'adhésif structural en combinant environ 70% de méthacrylate de méthyle; entre environ 1 et environ 10% d'additifs rhéologiques physiques et/ou chimiques, avantageusement de tels additifs physiques à raison d'environ 5%; d'environ 1 à environ 10%, avantageusement environ 5%, d'additifs d'adhérence; et d'environ 0,5 à 5%, d'au moins une amine aliphatique, hétérocyclique, aromatique, primaire, secondaire et/ou tertiaire, avantageusement environ 1% d'au moins une amine secondaire et/ou tertiaire.

Dans les mêmes tests que ceux relatés plus haut, l'allongement à la rupture sur des pièces de matériaux à chaque fois identiques ou comparables était de seulement 5%, tandis que la résistance à la traction/cisaillement sur Alu 6060 était de 18 MPa. Par ailleurs, un cataplasme humide 7 jours (à 70°C et 100% d'humidité, puis -20°C pendant 2 h), n'avait aucune tenue.

A titre indicatif, on peut se référer à cet égard aux méthodes d'essai:
- Normes de traction ISO 527A
   Vitesse de déplacement de la traverse : 10 mm.min⁻¹
   Géométrie des éprouvettes de: 1 x e (mm) = 10 x 4.
- Essais de cisaillement inspirés de la norme NF EN 1465 (NF T 76-107)
   Vitesse de déplacement de la traverse : 5 mm.min⁻¹
   Géométrie des éprouvettes: L x 1 x e (mm) = 100 x 25 x 4.
   Le recouvrement est en pratique de 300 mm environ.
- Cataplasme Humide D47-1165 (70°C pendant 7 jours, 100% d'humidité et 2h00 à -20°C)

En suivant ces modalités d'essai, on a ainsi obtenu avec différentes formules référencées SAF selon l'invention les résultats suivants:

| | SAF 30 | SAF 150-1 | SAF 150-2 | SAF400 | SAF401 |
|---|---|---|---|---|---|
| Ratio (durcisseur/résine) | 1/10 | 1/10 | 1/1 | 1/10 | 1/1 |
| Contrainte de Traction Cisaillement, en MPa (aluminium 6060) | 20-24 | 15-17 | 15 | 5 | 11 |
| Module de Young MPa | 220 | 100 | 20 | 1-2 | 12-15 |
| Allongement (en %) | 30 | 150 | 150 | 400 | 400 |

### Essais de collage de matériaux identiques ou différents

La composition pour collage selon l'invention est incorporée dans une base classique d'adhésif de type méthacrylate, pouvant elle-même comporter un ou plusieurs éléments styréniques, mais n'en comportant avantageusement pas. La formule adhésive ainsi formée polymérise au moyen d'un système classique redox comme toute formulation adhésive sur base méthacrylate traditionnelle.

Sans vouloir être lié par une quelconque théorie, on estime que la formulation d'adhésif structural selon l'invention tire son originalité et ses propriétés remarquables du choix des copolymères blocs sélectionnés et des monomères sélectionnés, qui contribuent à optimiser les propriétés élastiques, contrairement à un simple mélange de constituants analogues, qui ne procure que le tiers environ des propriétés recensées ci-dessous.

Des essais ont ainsi été effectués avec des formulations selon l'invention comportant essentiellement :

| | |
|---|---|
| Solution de copolymères à blocs | 70% en poids |
| Mélange de méthacrylates | 20% en poids |
| Additifs rhéologiques/additifs d'adhérence | 5% en poids |
| Divers | 5% en poids |

Dans des tests standards pour les essais appropriés, ces compositions ont présenté les caractéristiques suivantes:

| | |
|---|---|
| Allongement | > 400% |
| Résistance à la traction/ au cisaillement: | de 6 à 25 MPa |
| Module de Young | de 2 à 300 MPa |
| Tenue en température | jusqu'à 220°C |
| Cataplasme humide | 8 jours |

On a ainsi obtenu une grande élasticité des joints de collage, tout en conservant un module de Young élevé.

De telles spécificités ont été identifiées en particulier avec des formulations selon l'invention comportant:
(1) des copolymères à blocs formés de 2 blocs au moins et même préférentiellement de 3 blocs au moins, et
(2) dans de tels copolymères à blocs, des blocs alternés (notamment A-B-A-, A-B-B-A-, A-A-B-, A-A-B-B-C-, entre autres) dont les motifs A, B, C sont tels que définis plus haut, et éventuellement fonctionnalisés par des fonctions acide, hydroxyle et/ou acide méthacrylique.

En conduisant des essais de traction-cisaillement inspirés de la norme NF EN 1465 (NF T 76-107) sur un tel assemblage, on a obtenu les résultats visualisés sur la Figure annexée, à T = 0 min, T = 5 min, et T = 60 min. Le matériel de visualisation était un dynamomètre (modèle Instron) couplé à un ordinateur équipé d'un logiciel approprié.

L'allongement à la rupture constaté était d'environ 400%, alors même que des essais de ce type ont été pratiqués sur des assemblages de différents matériaux au moyen d'un joint de colle selon l'invention ayant une épaisseur pouvant aller de 250 micromètres à 25 millimètres.

Après réticulation, de telles formulations selon l'invention peuvent même résister à plus de 200°C, ce qui permet une utilisation sur des substrats devant être peints avec des peintures en poudre.

Les matériaux formant substrat pouvant être ainsi collés sur eux-mêmes ou entre eux sont notamment, mais pas exclusivement, l'aluminium, les alliages à base de magnésium, les alliages à base de titane, l'acier, l'acier galvanisé, l'acier inoxydable, les polyesters, le verre, le PMMA (polyméthacrylate de méthyle), les polycarbonates, le PVC, les matières thermoplastiques, les matières plastiques thermodurcissables, et analogues.

Le collage avec les moyens selon l'invention peut ainsi concerner un grand nombre de substrats, et singulièrement le bois et/ou le verre, sans primaire.

Avantageusement le collage et/ou calfatage selon l'invention peut ainsi viser le collage avec calfatage du teck sur un ensemble de substrats métalliques, de substrats polymères, ou sur lui-même. On obtient alors des collages résistants à chaud et à froid, et aux UV.

En résumé, les collages réalisés avec des adhésifs élaborés conformément à la présente invention se distinguent de ceux des adhésifs actuels en ce qu'ils peuvent présenter, entre autres:
- un allongement à la rupture allant jusqu'à plus de 400-450%, soit 10 fois plus qu'un adhésif sur base méthacrylate traditionnel;
- une résistance en traction/ cisaillement pouvant atteindre 6 MPa sur alu/ alu, soit 2 à 4 fois plus que des adhésifs sur base de polymères PU ou MS, qui ont des allongements respectifs d'environ 150% et 200%;
- une forte élasticité, se traduisant par un module d'élasticité pouvant atteindre 2 MPa, contre 250 MPa avec les méthacrylates traditionnels, donc sans fluage puisque plus le module d'élasticité est petit plus le produit est élastique;
- une matrice de collage entièrement réticulée, sans nécessité qu'on lui adjoigne un plastifiant interne;
- une élasticité maintenue dans le temps, ce qui est à rapprocher de l'absence avantageuse de plastifiant;
- une excellente résistance au vieillissement, avec en particulier quasiment les mêmes caractéristiques physico-chimiques avant et après vieillissement;
- une excellente résistance aux UV, sans baisse notable des niveaux des propriétés physico-chimiques et sans altération significative de l'aspect;
- la possibilité de réaliser des joints d'une épaisseur de 250 *µ*m à plus de 2,5 cm, ainsi que des collages plus fins que 250 *µ*m;
- des temps de réticulation ajustables jusqu'à 2 heures;
- une très bonne résistance au cataplasme humide (7 jours);
- une adhérence sur tous supports, sans préparation de la surface, notamment pour le collage entre eux de plusieurs substrats, identiques ou différents, en particulier du verre, sans avoir besoin d'utiliser un primaire.

Toutes ces qualités rendent les adhésifs structuraux selon l'invention particulièrement attractifs pour des collages de tous éléments de structure et/ou éléments mécaniques, dans l'industrie et dans le bâtiment, ainsi que dans toutes les applications de la vie courante.

## Revendications

1. Composition pouvant être utilisée dans des adhésifs structuraux, **caractérisée en ce qu'**elle comporte essentiellement un système polymérique apte à être mis en oeuvre dans une matrice de méthacrylate,
ledit système polymérique comprenant des copolymères à blocs sans styrène, formés d'au moins deux blocs et avantageusement d'au moins trois blocs, et ledit système polymérique étant solubilisé dans une matrice de monomères acryliques et/ ou méthacryliques, linéaires ou ramifiés, et/ ou de méthacrylates cycliques et/ou de méthacrylates aromatiques.

2. Composition selon la revendication 1, **caractérisée en ce que** les copolymères à blocs sans styrène dudit système polymérique sont essentiellement constitués de polymères thermo-durcissables et/ou thermoplastiques, présentant notamment des séquences A-B-A-, ou A-B-B-A- ou encore A-A-B-.

3. Composition selon la revendication 1, **caractérisée en ce que** lesdits copolymères à blocs sont des copolymères à blocs nanostructures.

4. Composition selon l'une des revendications 2 ou 3, **caractérisée en ce qu'**elle comporte dans la matrice méthacrylate des motifs méthacrylate et/ou SBR et/ou SBS, et plus préférentiellement des méthacrylates à 5 atomes de carbone, de type méthacrylate de méthyle, et/ ou à 8 atomes de carbone, de type méthacrylate de butyle.

5. Composition selon l'une des revendications 2 ou 3, **caractérisée en ce que** les motifs impliqués dans ledit copolymère à blocs sont fonctionnalisés, notamment par des fonctions acide ou hydroxyle, et préférentiellement des fonctions acide méthacrylique.

6. Composition selon la revendication 1, **caractérisée en ce que** le copolymère à blocs est solubilisé dans une matrice de monomères acryliques et/ ou méthacryliques aliphatiques, linéaires et/ ou ramifiés, et/ ou de méthacrylates cycliques et /ou de méthacrylates aromatiques.

7. Composition selon la revendication 6, **caractérisée en ce que** le copolymère à blocs est solubilisé à plus d'environ 5% en poids ou en volume, et avantageusement à plus d'environ 10% en poids ou en volume du copolymère dans ladite matrice.

8. Composition selon la revendication 1, **caractérisée en ce qu'**elle comprend:
• de 5 à 60%, et plus particulièrement de 10 à 30%, en poids de copolymère à blocs MAM-ABU-MAM ou MAM-BU-MAM fonctionnalisés ou non, tandis que MAM = méthacrylate de méthyle, ABU = acrylate de butyle, et BU = butadiène; et
• de 40 à 95%, et plus particulièrement de 70 à 90%, en poids d'acrylates et/ ou de méthacrylates aliphatiques, cycliques et/ ou aromatiques, linéaires et/ou ramifiés, ayant dans leur formule plus de 5 atomes de carbone, avantageusement de 5 à 10 atomes de carbone, de type méthacrylate de méthyle, méthacrylate d'éthyle, méthacrylate de propyle, méthacrylate de butyle, méthacrylate de pentyle, méthacrylate d'hexyle, méthacrylate de benzyle, méthacrylate de cyclohexyle et autres, pour former la matrice de solubilisation des copolymères à blocs.

9. Composition selon la revendication 1, **caractérisée en ce qu'**elle comprend:
- 40 à 87,50%, avantageusement 60 à 80%, desdits copolymères à blocs selon l'invention;
- 10 à 40% d'acrylates et/ ou méthacrylates, avantageusement 15 à 25% desdits méthacrylates;
- 1 à 10%, de préférence environ 5%, d'additifs rhéologiques physiques et/ ou chimiques, avantageusement environ 5% d'additifs rhéologiques physiques;
- 1 à 10%, avantageusement environ 5%, d'additifs d'adhérence;
- 0,5 à 5% d'une ou plusieurs aminés aliphatiques, hétérocycliques ou aromatiques, lesdites aminés pouvant être primaires, secondaires et/ou tertiaires, et avantageusement environ 1% d'aminés secondaires et/ ou tertiaires.

10. Procédé pour l'obtention d'une formulation selon l'une quelconque des revendications 1 à 9, dans lequel:
• on élabore ou on procure un système polymérique comprenant des copolymères à blocs sans styrène, formés d'au moins deux blocs et avantageusement d'au moins trois blocs,
• on solubilise ledit système polymérique dans une matrice de monomères acryliques et /ou méthacryliques, linéaires ou ramifiés, et/ ou de méthacrylates cycliques et/ ou de méthacrylates aromatiques, et
• on incorpore ou prescrit d'incorporer ladite matrice dans une formulation traditionnelle d'adhésif de type méthacrylate.

11. Utilisation d'une formulation selon l'une quelconque des revendications 1 à 9 pour la réalisation d'opérations de collage et/ ou de calfatage mettant en oeuvre un système redox.

12. Utilisation selon la revendication 11, **caractérisée en ce qu'**elle est mise en oeuvre sur des matières telles que verre, polystyrène, ABS, polyester, polycarbonate, aluminium, acier, acier inoxydable, acier galvanisé, et/ ou PMMA.

13. Utilisation selon l'une des revendications 11 ou 12 pour le collage et/ ou le calfatage, notamment de ponts et/ ou de coques de bateaux.

14. Utilisation selon l'une quelconque des revendications 11 à 13, **caractérisée en ce qu'**elle comprend un procédé de calfatage de bois, notamment d'un pont et/ ou d'une coque de navire, mettant en œuvre les étapes de:
a) dégraissage du bois à calfater et/ou du pont ou de la coque d'un navire,
b) application de ladite composition de colle/calfatage, et accostage du pont en teck,
c) remplissage des rainures avec ladite composition en amenant la résine appliquée à faire seulement un léger dôme pour lui permettre de compenser le retrait post-réticulation,
d) réticulation classique de la composition appliquée, et
e) ponçage de l'excédent de composition de calfatage/ collage de la surface des joints ainsi appliqués et durcis, après une durée pouvant ne pas dépasser 2-4 heures environ.

15. Utilisation selon la revendication 14, **caractérisé en ce qu'**elle comporte un collage direct sur le matériau à calfater, et un ponçage après environ 2 à 4 heures.

16. Utilisation selon la revendication 14, **caractérisé en ce qu'**elle comprend le remplissage des rainures à calfater de manière à compenser le retrait de post-réticulation.

## Patentansprüche

1. Zusammensetzung zur Verwendung in Strukturklebstoffen, **dadurch gekennzeichnet, dass** sie im Wesentlichen ein Polymersystem umfasst, das in einer Methacrylatmatrix eingesetzt werden kann,
wobei das Polymersystem Blockcopolymere ohne Styrol umfasst, die aus mindestens zwei Blöcken und vorteilhafterweise mindestens drei Blöcken gebildet werden, und wobei das Polymersystem in einer Matrix von geraden oder verzweigten Acryl- und/oder Methacrylmonomeren und/oder zyklischen Methacrylaten und/oder aromatischen Methacrylaten solubilisiert ist.

2. Zusammensetzung nach Anspruch 1, **dadurch gekennzeichnet, dass** die Blockcopolymere ohne Styrol des Polymersystems im Wesentlichen aus wärmehärtbaren und/oder thermoplastischen Polymeren bestehen, die insbesondere die Sequenzen A-B-A- oder A-B-B-A- oder A-A-B- aufweisen.

3. Zusammensetzung nach Anspruch 1, **dadurch gekennzeichnet, dass** es sich bei den Blockcopolymeren um Nanostruktur-Blockcopolymere handelt.

4. Zusammensetzung nach einem der Ansprüche 2 oder 3, **dadurch gekennzeichnet, dass** sie in der Methacrylatmatrix Methacrylat- und/oder SBR- und/oder SBS-Motive und stärker bevorzugt Methacrylate mit 5 Kohlenstoffatomen des Methylmethacrylat-Typs und/oder mit 8 Kohlenstoffatomen des Butylmethacrylat-Typs enthält.

5. Zusammensetzung nach einem der Ansprüche 2 oder 3, **dadurch gekennzeichnet, dass** die in das Blockcopolymer eingeschlossenen Motive insbesondere mit Säure- oder Hydroxylfunktionen und vorzugsweise mit Methacrylsäurefunktionen funktionalisiert sind.

6. Zusammensetzung nach Anspruch 1, **dadurch gekennzeichnet, dass** das Blockcopolymer in einer Matrix von geraden und/oder verzweigten aliphatischen Acryl- und/oder Methacrylmonomeren und/oder zyklischen Methacrylaten und/oder aromatischen Methacrylaten solubilisiert ist.

7. Zusammensetzung nach Anspruch 6, **dadurch gekennzeichnet, dass** das Blockcopolymer zu mehr als etwa 5 Gew.-% oder Vol.-% und vorteilhafterweise zu mehr als etwa 10 Gew.-% oder Vol.-% des Copolymers in der Matrix solubilisiert ist.

8. Zusammensetzung nach Anspruch 1, **dadurch gekennzeichnet, dass** sie umfasst:
• 5 bis 60 Gew.-% und insbesondere 10 bis 30 Gew.-% funktionalisiertes oder nicht funktionalisiertes MAM-ABU-MAM- oder MAM-BU-MAM-Blockcopolymer, wobei MAM = Methylmethacrylat, ABU = Butylacrylat und BU = Butadien; und
• 40 bis 95 Gew.-% und insbesondere 70 bis 90 Gew.-% gerade und/oder verzweigte, aliphatische, cyclische und/oder aromatische Acrylate und/oder Methacrylate mit mehr als 5 Kohlenstoffatomen, vorteilhafterweise 5 bis 10 Kohlenstoffatomen, in ihrer Formel des Methylmethacrylat-, Ethylmethacrylat-, Propylmethacrylat-, Butylmethacrylat-, Pentylmethacrylat-, Hexylmethacrylat-, Benzylmethacrylat-, Cyclohexylmethacrylat-Typs und anderer Typen, zur Bildung der Solubilisationsmatrix der Blockcopolymere.

9. Zusammensetzung nach Anspruch 1, **dadurch gekennzeichnet, dass** sie umfasst:
- 40 bis 87,50%, vorteilhafterweise 60 bis 80%, der Blockcopolymere gemäß der Erfindung;
- 10 bis 40% Acrylate und/oder Methacrylate, vorteilhafterweise 15 bis 25% der Methacrylate;
- 1 bis 10%, vorzugsweise etwa 5%, physikalische und/oder chemische rheologische Additive, vorteilhafterweise etwa 5% physikalische rheologische Additive;
- 1 bis 10%, vorteilhafterweise etwa 5%, Haftadditive;
- 0,5 bis 5% eines oder mehrerer aliphatischer, heterocyclischer oder aromatischer Amine, wobei die Amine primär, sekundär und/oder tertiär sein können, und vorteilhafterweise etwa 1% sekundäre und/oder tertiäre Amine.

10. Verfahren zum Erhalten einer Formulierung nach einem der Ansprüche 1 bis 9, wobei:
• man ein Polymersystem herstellt oder bereitstellt, das Blockcopolymere ohne Styrol umfasst, die aus mindestens zwei Blöcken und vorteilhafterweise mindestens drei Blöcken gebildet werden,
• man das Polymersystem in einer Matrix von geraden oder verzweigten Acryl- und/oder Methacrylmonomeren und/oder zyklischen Methacrylaten und/oder aromatischen Methacrylaten solubilisiert und
• man die Matrix in eine herkömmliche Klebstoffformulierung des Methacrylat-Typs einbringt oder einzubringen vorschreibt.

11. Verwendung einer Formulierung nach einem der Ansprüche 1 bis 9 zur Durchführung von Klebe- und/oder Abdichtungsarbeiten unter Einsatz eines Redoxsystems.

12. Verwendung nach Anspruch 11, **dadurch gekennzeichnet, dass** sie an Materialien wie Glas, Polystyrol, ABS, Polyester, Polycarbonat, Aluminium, Stahl, nichtrostendem Stahl, verzinktem Stahl und/oder PMMA durchgeführt wird.

13. Verwendung nach einem der Ansprüche 11 oder 12 zum Kleben und/oder Abdichten, insbesondere von Decks und/oder Rümpfen von Wasserfahrzeugen.

14. Verwendung nach einem der Ansprüche 11 bis 13, **dadurch gekennzeichnet, dass** sie ein Verfahren zum Abdichten von Holz, insbesondere eines Schiffsdecks und/oder -rumpfs, umfasst, das die folgenden Schritte einsetzt:
(a) Entfetten des abzudichtenden Holzes und/oder des Decks oder Rumpfs eines Schiffs,
(b) Aufbringen der Klebe-/Abdichtungszusammensetzung und Anbringen des Teakdecks,
(c) Füllen der Nuten mit der Zusammensetzung durch Eintragen des aufgebrachten Harzes, so dass es nur eine leichte Wölbung bildet, damit es das Schwinden nach Vernetzung kompensieren kann,
(d) herkömmliche Vernetzung der aufgebrachten Zusammensetzung und
(e) Abschleifen des Überstands an Abdichtungs-/Klebezusammensetzung von der Oberfläche der so aufgebrachten und gehärteten Abdichtungen nach einer Dauer von nicht mehr als etwa 2-4 Stunden.

15. Verwendung nach Anspruch 14, **dadurch gekennzeichnet, dass** sie Kleben direkt auf das abzudichtende Material und Abschleifen nach etwa 2 bis 4 Stunden umfasst.

16. Verwendung nach Anspruch 14, **dadurch gekennzeichnet, dass** sie Füllen der abzudichtenden Nuten derart, dass das Schwinden nach der Vernetzung kompensiert wird, umfasst.

## Claims

1. Composition which can be used in structural adhesives, **characterized in that** it essentially comprises a polymeric system capable of being used in a methacrylate matrix,
said polymeric system comprising styrene-free block copolymers, formed from at least two blocks and advantageously from at least three blocks, and said polymeric system being solubilized in a matrix of linear or branched acrylic and/or methacrylic monomers, and/or of cyclic methacrylates and/or of aromatic methacrylates.

2. Composition according to Claim 1, **characterized in that** the styrene-free block copolymers of said polymeric system essentially consist of thermosetting and/or thermoplastic polymers, in particular having A-B-A-, or A-B-B-A- or else A-A-B- sequences.

3. Composition according to Claim 1, **characterized in that** said block copolymers are nanostructure block copolymers.

4. Composition according to either of Claims 2 and 3, **characterized in that** it comprises, in the methacrylate matrix, methacrylate and/or SBR and/or SBS units, and more preferentially methacrylates containing 5 carbon atoms, of methyl methacrylate type, and/or containing 8 carbon atoms, of butyl methacrylate type.

5. Composition according to either of Claims 2 and 3, **characterized in that** the units involved in said block copolymer are functionalized, in particular with acid or hydroxyl functions, and preferentially methacrylic acid functions.

6. Composition according to Claim 1, **characterized in that** the block copolymer is solubilized in a matrix of linear and/or branched aliphatic acrylic and/or methacrylic monomers, and/or of cyclic methacrylates and/or of aromatic methacrylates.

7. Composition according to Claim 6, **characterized in that** the block copolymer is solubilized at more than approximately 5% by weight or by volume, and advantageously at more than approximately 10% by weight or by volume of the copolymer in said matrix.

8. Composition according to Claim 1, **characterized in that** it comprises:
• from 5 to 60%, and more particularly from 10 to 30%, by weight of functionalized or non-functionalized MMA-BUA-MMA or MMA-BU-MMA block polymer, while MMA = methyl methacrylate, BUA = butyl acrylate, and BU = butadiene; and
• from 40 to 95%, and more particularly from 70 to 90%, by weight of acrylates and/or methacrylates which are aliphatic, cyclic and/or aromatic, linear and/or branched, having in their formula more than 5 carbon atoms, advantageously from 5 to 10 carbon atoms, of the type methyl methacrylate, ethyl methacrylate, propyl methacrylate, butyl methacrylate, pentyl methacrylate, hexyl methacrylate, benzyl methacrylate, cyclohexyl methacrylate and the like, so as to form the matrix for the solubilization of the block copolymers.

9. Composition according to Claim 1, **characterized in that** it comprises:
- 40 to 87.50%, advantageously 60 to 80%, of said block copolymers according to the invention;
- 10 to 40% of acrylates and/or methacrylates, advantageously 15 to 25% of said methacrylates;
- 1 to 10%, preferably approximately 5%, of physical and/or chemical rheological additives, advantageously approximately 5% of physical rheological additives;
- 1 to 10%, advantageously approximately 5%, of adhesion additives;
- 0.5 to 5% of one or more aliphatic, heterocyclic or aromatic amines, it being possible for said amines to be primary, secondary and/or tertiary, and advantageously approximately 1% of secondary and/or tertiary amines.

10. Process for obtaining a formulation according to any one of Claims 1 to 9, in which:
• a polymeric system comprising styrene-free block copolymers, formed from at least two blocks and advantageously from at least three blocks, is developed or obtained,
• said polymeric system is solubilized in a matrix of linear or branched acrylic and/or methacrylic monomers, and/or of cyclic methacrylates and/or of aromatic methacrylates, and
• said matrix is incorporated in a conventional methacrylate-type adhesive formulation or the incorporation of said matrix in a conventional methacrylate-type adhesive formulation is prescribed.

11. Use of a formulation according to any one of Claims 1 to 9, for carrying out bonding and/or caulking operations using a redox system.

12. Use according to Claim 11, **characterized in that** it is implemented on materials such as glass, polystyrene, ABS, polyester, polycarbonate, aluminium, steel, stainless steel, galvanized steel, and/or PMMA.

13. Use according to either of Claims 11 and 12, for bonding and/or caulking, in particular decks and/or hulls of boats.

14. Use according to any one of Claims 11 to 13, **characterized in that** it comprises a process for caulking wood, in particular a deck and/or a hull of a ship, implementing the steps of:
a) degreasing the wood to be caulked and/or the deck or the hull of a ship,
b) applying said bonding/caulking composition, and docking the teak deck,
c) filling the grooves with said composition while making the applied resin make only a slight dome so as to allow it to compensate for the post-crosslinking shrinkage,
d) conventionally crosslinking the applied composition, and
e) sanding the excess caulking/bonding composition from the surface of the seals thus applied and hardened, after a period which may not exceed approximately 2-4 hours.

15. Use according to Claim 14, **characterized in that** it comprises direct bonding on the material to be caulked, and sanding after approximately 2 to 4 hours.

16. Use according to Claim 14, **characterized in that** it comprises filling the grooves to be caulked so as to compensate for the post-crosslinking shrinkage.
